# EUROPEAN PATENT SPECIFICATION

(11) **EP 2 396 842 B1**
(45) Date of publication and mention of the grant of the patent: **13.11.2013**
(21) Application number: 10703500.8
(22) Date of filing: 04.02.2010
(51) Int. Cl.: H01M 4/86, H01M 8/02, H01M 8/08, H01M 4/88

(54) **GAS DIFFUSION SUBSTRATE**
GASDIFFUSIONSSUBSTRAT
SUBSTRAT DE DIFFUSION DE GAZ

(30) Priority: 12.02.2009 GB 0902312
(43) Date of publication of application: 21.12.2011
(73) Proprietor: Johnson Matthey Fuel Cells Limited, London EC4A 4AB (GB); Technical Fibre Products Limited, Kendal, Cumbria LA9 6PZ (GB)
(72) Inventor: JESCHKE, Michael, Kendal Cumbria LA9 7HU (GB); SHARMAN, Jonathan Brereton, Reading Berkshire RG4 9JR (GB)
(74) Representative: Swift, Jane Elizabeth Berrisford
(86) International application number: PCT/GB2010/050175
(87) International publication number: WO 2010/092370

(56) References cited:
- WO-A1-2005/124902
- US-A- 6 039 823
- US-A1- 2004 058 229

## Description

The present invention relates to a gas diffusion substrate, particularly a gas diffusion substrate for use in a fuel cell, such as a phosphoric acid fuel cell (PAFC). The invention further relates to a process for manufacturing such a gas diffusion substrate.

A fuel cell is an electrochemical cell comprising two electrodes separated by an electrolyte. A fuel, e.g. hydrogen, an alcohol (such as methanol or ethanol), or formic acid, is supplied to the anode and an oxidant, e.g. oxygen or air, or other oxidant such as hydrogen peroxide is supplied to the cathode. Electrochemical reactions occur at the electrodes, and the chemical energy of the fuel and the oxidant is converted to electrical energy and heat. Electrocatalysts are used to promote the electrochemical oxidation of the fuel at the anode and the electrochemical reduction of the oxidant at the cathode.

Fuel cells are usually classified according to the nature of the electrolyte employed. In the PAFC, cells are fabricated from a phosphoric acid electrolyte contained in a thin inert matrix layer sandwiched between the anode and cathode electrodes. In the proton exchange membrane fuel cell (PEMFC), the electrolyte layer is typically a thin proton-conducting polymer located between the electrode layers. Either of these cells can operate on pure hydrogen fuel, or a more dilute hydrogen containing fuel mixture formed by the reforming of a hydrocarbon fuel, or particularly in the case of the PEMFC, can operate directly on hydrocarbon fuels such as methanol or ethanol.

The electrodes of the PAFC and PEMFC usually comprise a gas-porous, electrically conductive and chemically inert gas diffusion substrate (GDS) and an electrocatalyst layer, comprising the electrocatalyst, which is facing, and in contact with, the electrolyte or membrane. The substrate provides a mechanical support for the electrocatalyst layer and allows for diffusion of the reactant hydrogen and oxygen species from the bulk flow streams to the reaction sites within the electrocatalyst layers. The substrate also enables efficient removal of product water formed within the electrocatalyst layer to the bulk flow streams and provides for heat and electron transfer through the cells.

The specific structural design of any GDS is highly dependent on the type of fuel cell and the conditions in which it is to be operated. However, the basic construction of most substrates employed in today's PAFC and PEMFC is based on resin-bonded carbon fibre paper substrate technology. As described in WO2008/051280A2 the basic process for producing these substrates typically involves (i) forming a non-woven web of carbon fibres from a wet lay process such as paper-making, (ii) impregnating the web with a thermoset phenolic resin, (iii) pressing one or more layers of the web at a temperature sufficient to cure the resin, (iv) heat treating in an inert atmosphere at a temperature up to around 1000°C to carbonise the resin, and (v) heat treating in an inert atmosphere at temperatures between 2000 to 3000°C to partially graphitise the carbon, to improve electrical and thermal conductivity and corrosion resistance.

Gas diffusion substrates of this construction have been developed by commercial substrate developers and have been used as key components in PAFC power plant manufacture. In these practical fuel cell systems a series of the basic cells, comprising anode, electrolyte and cathode, together with separator plates through which the reactant gases and products flow, are assembled together to form a stack of cells that enable the appropriate stack voltage, current and thus power outputs to be obtained. As described in "Handbook of Fuel Cells, Volume 4, Part 2, Chapter 59, 797-810, published 2003 John Wiley and Sons Ltd, ISBN: 0-471-49926-9", substrates of the type produced by Toray Industries Inc. as disclosed in US 4,851,304, were employed in the 200kW PC-25 PAFC power plants produced by United Technologies Corporation (UTC) from the early 1990's. In US 4,851,304, a porous electrode substrate for a fuel cell comprising short carbon fibres dispersed in random direction within a substantially 2-dimensional plane and carbonised resin for mutually bonding the fibres is disclosed. The carbon fibres have a diameter from 4 to 9 µm and a length from 3 to 20 mm, with the content of the carbonised resin being from 35 to 60% by weight of the overall substrate.

In a report published by The Tokyo Electric Power Company Inc. (Journal of Power Sources, Vol. 49, 1994, pages 77-102) on the evaluation of a number of PAFC power plants, they indicate that several cell improvements are required to further improve the commercial viability of these types of fuel cell power plants. Thermal conductivity is cited as an important characteristic of the GDS and that this needs to be as high as possible to remove the heat generated in the electrode reaction efficiently. The more efficient the heat removal, the lower the number of cooling plates required in the stack assembly and the lower the stack height and cost.

The typical carbon fibres employed to produce the non-woven carbon fibre webs are based on heat treated polyacrylonitrile, and are known as PAN based carbon fibres. US 7,429,429 B2 discloses that a substrate made from long fibre PAN has a thermal conductivity of 1.2 W/m.K. The thermal conductivity can be increased by using pitch based carbon fibres rather than PAN-based carbon fibres, or by using short milled fibres (0.25mm to 0.50mm), or by increasing the final heat treatment temperature in the substrate fabrication process. Data is shown that when using short milled, and pitch based, carbon fibres, and heat-treating to 3000°C, the thermal conductivity attained is around 4.4 W/m.K. The same material heat treated to a lower temperature of 2100°C has a much lower thermal conductivity by a factor of 2.5 times, at only around 1.75 W/m.K.

It is therefore an object of the present invention to provide a gas diffusion substrate, in particular one suitable for use in a phosphoric acid fuel cell that has improved thermal conductivity over state-of-the-art substrates. In particular it is an object of the present invention to provide a gas diffusion substrate that has a minimum through-plane thermal conductivity of 3 W/m.k at a pressure of 1000 kPa and preferably a minimum through-plane thermal conductivity of 4 W/m.k at a pressure of 1000 kPa when heat treated at a lower temperature than required for state of the art materials.

Accordingly, a first aspect of the invention provides a porous gas diffusion substrate comprising a non-woven fibre web, thermally conductive materials and a carbonaceous residue, wherein the thermally conductive materials and carbonaceous residue are embedded within the non-woven fibre web and wherein the thermally conductive materials have a maximum dimension of between 1 and 100µm and the gas diffusion substrate has a porosity of less than 80%, characterised in that the ratio of thermally conductive materials: carbonaceous residue is from 10:90 to 30:70. The poronty 11 suitably less than 75%.

For materials that are essentially spherical, the 'maximum dimension' will be the diameter of the sphere. For materials that are not spherical, the 'maximum dimension' is the dimension of the longest axis. Suitably, the maximum dimension of the thermally conductive particles is between 6 and 100µm, and preferably between 10 and 100µm. It will be appreciated by the skilled person that the maximum dimension of the thermally conductive materials may cover a range of sizes. It is within the scope of the invention if at least 50%, suitably at least 70% and preferably at least 90% of the thermally conductive materials in the gas diffusion substrate have a maximum dimension of between 1 and 100µm.

By the term "thermally conductive materials", is meant materials that have a high intrinsic thermal .conductivity, at least in one direction if the material is anisotropic in physical properties, and which can pack into the non-woven web to give a good effective thermal conductivity in the final substrate. Examples of such thermally conductive materials include:
(i) Particles, for example graphite (either natural or synthetic), such as V-SGA5 from Branwell Graphite Ltd or Timrex^{®} SFG6 from Timcal Graphite & Carbon. Suitably the particles have a d90 of 6-100µm and preferably 10-100µm. The d90 measurement means that 90% of the particles have a diameter less than the d90 value; e.g. a d90 of 6µm means that 90% of the particles have a diameter less than 6µm.
(ii) Fibrous or tubular materials, for example nanofibres and nanotubes, such as Pyrograf III^{®} Carbon Fiber from Pyrograf Products Inc. or VGCF-H from Showa Denko K.K.. Suitably, the fibrous or tubular materials have a minimum length of 1µm, suitably 6µm and preferably 10µm and have a diameter of 5nm to 1µm, preferably 50-500nm.
(iii) Disc-shaped materials, for example nanographene platelets such as N008-100-05 or N006-010-00 from Angstron materials LLC. Suitably, the disc-shaped materials have a dimension across the disc (x/y-direction) of 40µm or less, and a thickness through the disc (z-direction) of 100nm or less.
(iv) any other form of thermally conductive carbon, such as carbon blacks and any heat-treated versions thereof, hyperfullerenes, pitch-based carbon foam etc.

Most suitably, the thermally conductive materials are particles, preferably graphite (either natural or synthetic).

In one aspect, it is also preferred that the thermally conductive particles are also electrically conductive.

The carbonaceous residue in the gas diffusion substrate is obtained by heat-treating a carbonisable binder at a temperature of 600-1000°C in a suitable non-oxidising gas atmosphere such as nitrogen or carbon dioxide or other inert gas. The carbonisable binder is, for example, a phenolic resin binder or a pitch-based resin or other high-yield carbonisable resin such as polyvinylpyrrolidone (PVP). Examples of suitable binders include: SC-1008 from Borden Chemical Inc.; phenolic novolac and resol resins from Dowell Trading Co. Ltd. In the final substrate, the binder has been carbonised and therefore the substrate comprises a carbonaceous residue of the carbonisable binder.

The ratio of thermally conductive materials : carbonaceous residue is from 10:90 to 30:70.

The thermally conductive materials and carbonaceous residue are present in the substrate at a combined weight of 5-700%, suitably 15-150% and preferably 30-90% compared to the weight of the non-woven fibre web.

The non-woven fibre web from which the substrate is prepared suitably comprises carbon fibres (for example those derived from polyacrylonitrile (PAN) fibres (such as SIGRAFIL^{®} C grades from SGL Group, Tenax grades (e.g. 140, 143 and 150) from Toho Tenax), pitch fibres (such as Thornel^{®} Continuous Pitch-based carbon fibres and Thermalgraph^{®} fibres both from Cytec Industries Inc.), rayon fibres or fibres derived from any other polymer precursor), activated carbon fibres (such as KOTHmex ACF from Taiwan Carbon Technology Co. Ltd and ACF 1603-15 and 1603-20 from Kynol Europa GmbH), carbon nanofibres, pitch based foam fibres or a mixture of one or more thereof. Suitably, the non-woven fibre web comprises carbon fibres or carbon nanofibres.

The fibres from which the non-woven fibre web is prepared suitably have a diameter of 5nm to 12µm; if the fibres are nanofibres, suitably the diameter is from 5nm to 1µm, preferably 50-500nm; for all other fibres, suitably, the diameter is from 1µm to 12µm, preferably 5µm to 9µm.

The fibre length of the fibres from which the non-woven fibre web is prepared will depend on the type of fibres being used. For nanofibres, the length is suitably from 10nm to 10µm, preferably from 100nm to 1000nm; for all other types of fibres, the length is suitably from 2mm to 100mm, more suitably 3mm to 50mm, more suitably 3mm to 25mm, preferably 6mm to 18mm and most preferably 6mm to 12mm. Fibres of two or more different lengths or type may be used in the same web.

The non-woven fibre web suitably has a weight of 10-500gsm, suitably 50-100gsm, preferably 70-85gsm. Prior to impregnation with the carbonisable binder, the non-woven fibre web is held together with a polymeric binder or other thermally degradable binder. Examples of suitable binders include: polyvinyalcohol (PVA) fibres such as Mewlon SML from by Unitika Kasei Ltd and Fibribond VPB107-1 from Kuraray Co. Ltd.; polyester aqueous dispersions such as WD-30 Water-Dispersible Polymer (30% Solids) from Eastman Chemical Company; a styrene/acrylic water based system such as Acronal S605, 500D or 205D from BASF; or a polyvinylpyrrolidone solution in water such as K-15 from International Speciality Products (ISP). The polymeric binder is removed from the non-woven fibre web during preparation of the substrate and is therefore not present in the final product. The non-woven fibre web may be obtained as a pre-formed mat comprising fibres as listed above. Examples of such pre-formed mats include the Optimal^{®} range of products from Technical Fibre Products Ltd or the AFN^{®} Advanced Fiber Nonwovens range of products from Hollingsworth and Vose. Alternatively, the individual fibres may be sourced and a non-woven fibre web prepared by a technique known to those skilled in the art. Such techniques include processes such as wet laid paper making methods, hydro-entanglement or dry deposition processes.

The gas diffusion substrate of the invention may either be essentially isotropic or anisotropic, but suitably it is essentially isotropic. By the term 'essentially isotropic' we mean that the x-y directional properties of the non-woven fibre web are balanced within 15%, preferably within 10% of each other with respect to tensile strength and surface resistivity; an anisotropic structure results in a material where the x-y directional properties for tensile strength are as high as 500:1 (MD:CD) and for surface resistivity as high as 100:1 (MD:CD) (MD = machine direction and CD = cross-direction and is perpendicular to the machine direction). Techniques for measuring the tensile strength and surface resistivity will be know to those skilled in the art: tensile strength can be measured using tests ASTM D638 or ISO 527; surface resistivity can be measure using test ASTM D257-99.

The gas diffusion substrate of the invention may be used as an electrode in any electrochemical device requiring a gas diffusion substrate. Accordingly, a further aspect of the invention provides a gas diffusion electrode comprising a gas diffusion substrate of the invention and an electrocatalyst applied to the gas diffusion substrate. The gas diffusion substrate may be provided with a further treatment prior to incorporation into a gas diffusion electrode either to make it more wettable (hydrophilic) or more wet-proofed (hydrophobic). The nature of any treatments will depend on the type of fuel cell and the operating conditions that will be used. The substrate can be made more wettable by incorporation of materials such as amorphous carbon blacks via impregnation from liquid suspensions, or can be made more hydrophobic by impregnating the pore structure of the substrate with a colloidal suspension of a polymer such as polytetrafluoroethylene (PTFE) or polyfluoroethylenepropylene (FEP), followed by drying and heating above the softening point of the polymer. For some applications, such as PEMFC, an additional carbonaceous layer commonly termed a micro-porous layer or base layer may also be applied before the deposition of the electrocatalyst layer. The substrate of the invention is also suitable for cells where the catalyst layer is deposited on the membrane or other separator, which electrically separates the anode and cathode electrodes and acts as an electrolyte.

Suitable electrocatalysts are selected from
(i) the platinum group metals (platinum, palladium, rhodium, ruthenium, iridium and osmium),
(ii) gold or silver,
(iii) a base metal,
or an alloy or mixture comprising one or more of these metals or their oxides. The metal, alloy or mixture of metal may be unsupported or supported on a suitable support, for example particulate carbon. The electrocatalyst most appropriate for any given electrochemical device would be well known to those skilled in the art.

The electrode of the invention may be used directly in a fuel cell, for example a phosphoric acid fuel cell wherein the electrolyte is liquid phosphoric acid in a supporting matrix, for example silicon carbide.

Alternatively, the substrate or electrode of the invention may be incorporated into a membrane electrode assembly for use in a proton exchange membrane fuel cell. Accordingly, a further aspect of the invention provides a membrane electrode assembly comprising a substrate of the invention and a catalyst-coated proton exchange membrane, wherein the substrate is adjacent to the catalyst coating on the membrane. In an alternative aspect of the invention, there is provided a membrane electrode assembly comprising an electrode of the invention and a proton exchange membrane, wherein the catalyst layer on the electrode is adjacent to the membrane.

Electrochemical devices in which the, substrate, electrode and membrane electrode assembly of the invention may be used include fuel cells, in particular phosphoric acid and proton exchange membrane fuel cells. Accordingly, a further aspect of the invention provides a fuel cell comprising a substrate, an electrode or a membrane electrode assembly of the invention. In one preferred embodiment, the fuel cell is a phosphoric acid fuel cell comprising a substrate or an electrode of the invention. In a second embodiment, the fuel cell is a proton exchange membrane fuel cell comprising a substrate, an electrode or a membrane electrode assembly of the invention.

A still further aspect of the invention provides a process for preparing the gas diffusion substrate of the invention, said process comprising the steps of:
(i) impregnating a non-woven fibre web with a mixture of thermally conductive particles and carbonisable binder to give an impregnated web;
(ii) curing the carbonisable binder within the non-woven fibre web at a temperature of 100-250°C;
(iii) a first heat treatment step of the impregnated web at 600-1000°C, suitably 700-900°C and preferably around 800°C to carbonise the carbonisable binder to leave a carbonaceous residue; and
(iv) a second heat treatment step at 1800-3000°C, suitably 1800-2500°C, and preferably around 2000-2300°C to provide the gas diffusion substrate.

The temperatures provided above are approximated temperatures and temperatures within ± 50°C of those given are included within the scope of the invention. The temperature required in step (ii) will depend on the particular carbonisable binder used.

The impregnating process of step (i) may be carried out by any techniques known to those skilled in the art, for example horizontal or vertical impregnation.

Optionally, before the first heat treatment step (step (iii)), two or more impregnated non-woven fibre webs are laminated, either cross-plied or non-cross-plied, in a press between 150°C and 160°C at a range of pressures to give a total thickness of 0.05mm to 10mm, suitably 0.10mm to 0.80mm and preferably 0.20mm to 0.65mm. The laminates are then subjected to heat treatment steps (iii) and (iv) as described above.

The invention will now be described further by way of example, which is illustrative but not limiting of the invention.

### Example 1

An isotropic carbon fibre web, of 83 gsm and bound with 10% poly vinyl alcohol binder (Mewlon SML), was impregnated with phenolic resin (Borden SC-1008) and graphite particles (VSGA5 99.9; d90 of 13µm) to give a combined weight of 201gsm (including 6% volatile fraction) of which 26% of the additional weight was graphite particles. After pressing two non-cross plied sheets together at 150-160°C, at a suitable pressure to give a laminate thickness of 0.60-0.65 mm, the laminate was heat treated at 900°C followed by 2500°C at a specific ramp rate/cool regime whilst under compression (at a pressure of 0.221 kg/cm²) during the heat treatment. Through-plane electrical resistance, using a two-electrode configuration, and through-plane thermal conductivity (using a NETZSCH model LFA 447 NanoFlash diffusivity apparatus) over a range of compressions were measured and the results are given in Table 1 (electrical resistance) and Table 2 (thermal conductivity) below. The porosity of the substrate was measured using mercury porosimetry and found to be around 70%.

### Comparative Example 1

An isotropic carbon fibre web, of 83 gsm and bound with 10% poly vinyl alcohol binder (Mewlon SML), was impregnated with phenolic resin (Borden SC-1008) to give a weight of 201gsm (including 6% volatile fraction). After pressing two non-cross plied sheets together at 150-160 deg C, at a suitable pressure to give a laminate thickness of 0.60-0.65 mm, the laminate was heat treated at 900°C followed by 2800°C at a specific ramp rate/cool regime whilst under compression (at a pressure of 0.221 kg/cm2) during the heat treatment. Through-plane electrical resistance and through-plane thermal conductivity over a range of compressions was measured and the results are given in Table 1 (electrical resistance) and Table 2 (thermal conductivity) below. The porosity of the substrate was measured using mercury porosimetry and found to be around 70.5%

**Table 1: Electrical Through-plane Resistance**

| | Electrical Through-plane Resistance (mohm.cm²) at Varying Compressions | | | | | |
|---|---|---|---|---|---|---|
| | 300 kPa | 500 kPa | 600 kPa | 700 kPa | 800 kPa | 1000 kPa |
| Example 1 | 6.49 | 4.89 | 5.08 | 4.74 | 4.40 | 4.11 |
| Comparative Example 1 | 7.10 | 6.38 | 6.04 | 5.90 | 5.76 | 5.68 |

**Table 2: Thermal Conductivity at Varying Compressions**

| | Through-plane Thermal Conductivity (W/m.k) at Varying Compressions | | | | | |
|---|---|---|---|---|---|---|
| | 0 kPa | 350 kPa | 692 kPa | 1000 kPa | 1500 kPa | 2500 kPa |
| Example 1 | 1.71 | 2.40 | 3.49 | 4.47 | 4.82 | 5.34 |
| Comparative Example 1 | 0.76 | 2.04 | 2.39 | 2.59 | 2.69 | 2.74 |

The electrical resistivity and thermal conductivity data sets both show that a significant improvement in technical performance can be achieved in the Example 1 compared to Comparative Example 1, i.e. the control. Over a range of pressures the performance of both electrical resistivity and thermal conductivity are improved (increased thermal conductivity and lower electrical resistivity) via the inclusion of graphite particles of a certain size. Furthermore it can be seen that the thermal conductivity of Comparative Example 1 was measured as 2.59W/m.k after the substrate had been heat treated at a high temperature of 2800°C, whereas the Example 1 of the invention has achieved a much higher and desirable thermal conductivity of 4.47W/m.k whilst heat-treated at a much lower temperature of 2500°C. In addition to the technical benefits of achieving a high thermal conductivity, the lower heat treatment temperature required provides for a substrate that can be produced at a lower cost.

## Claims

1. A porous gas diffusion substrate comprising a non-woven fibre web, thermally conductive materials and a carbonaceous residue, wherein the thermally conductive materials and carbonaceous residue are embedded within the non-woven fibre web and wherein the thermally conductive materials have a maximum dimension of between 1 and 100µm and the gas diffusion substrate has a porosity of less than 80%, **characterised in that** the ratio of thermally conductive materials : carbonaceous residue is from 10:90 to 30:70.

2. A gas diffusion substrate according to claim 1, wherein the thermally conductive materials are particles having a d90 of 6-100µm.

3. A gas diffusion substrate according to claim 2, wherein the particles are graphite (natural or synthetic).

4. A gas diffusion substrate according to claim 1, wherein the thermally conductive materials are selected from the group consisting of: fibrous or tubular materials; disc-shaped materials; or any other form of thermally conductive carbon.

5. A gas diffusion substrate according to any one of claims 1 to 4, wherein the carbonaceous residue is obtained from a carbonisable binder.

6. A gas diffusion substrate according to claim 5, wherein the carbonisable binder comprises a phenolic binder, a pitch-based resin or other high-yield carbonisable resin.

7. A gas diffusion substrate according to any one of claims 1 to 6, wherein the thermally conductive materials and carbonaceous residue are present in the substrate at a combined weight of 5-700% compared to the weight of the non-woven fibre web.

8. A gas diffusion substrate according to any one of claims 1 to 7, wherein the through-plane thermal conductivity of the substrate is at least 3 W/m.k at a pressure of 1000 kPa.

9. A process for preparing a gas diffusion substrate as claimed in any one of claims 1 to 8, said process comprising the steps of :
(i) impregnating a non-woven fibre web with a mixture of thermally conductive materials and carbonisable binder, wherein the ratio of thermally conductive materials : carbonaceous residue is from 10:90 to 30:70, to give an impregnated web;
(ii) curing the carbonisable binder within the non-woven fibre web at a temperature of 100-250°C;
(iii) a first heat treatment step of the impregnated web at 600-1000°C to carbonise the carbonisable binder to leave a carbonaceous residue; and
(iv) a second heat treatment step at 1800-3000°C to provide the gas diffusion substrate.

10. A process according to claim 9, wherein before step (iii), two or more impregnated non-woven fibres webs are laminated.

11. A gas diffusion electrode comprising a gas diffusion substrate as claimed in any one of claims 1 to 8 and an electrocatalyst applied to the gas diffusion substrate.

12. A membrane electrode assembly comprising a substrate as claimed in any one of claims 1 to 8 and a catalyst-coated proton exchange membrane.

13. A membrane electrode assembly comprising an electrode as claimed in claim 11, and a proton exchange membrane.

14. A fuel cell comprising a substrate as claimed in any one of claims 1 to 8, an electrode as claimed in claim 11, or a membrane electrode assembly as claimed in any one of claims 12 and 13.

15. A phosphoric acid fuel cell comprising a substrate as claimed in any one of claims 1 to 8 or an electrode as claimed in claim 11.

## Patentansprüche

1. Poröses Gasdiffusionssubstrat umfassend ein nichtgewebtes Faservlies, Wärme leitende Materialien und einen kohlenstoffhaltigen Rückstand, wobei die Wärme leitenden Materialien und der kohlenstoffhaltige Rückstand in das nichtgewebte Faservlies eingebettet sind und wobei die Wärme leitenden Materialien eine maximale Dimension zwischen 1 und 100 µm aufweisen und das Gasdiffusionssubstrat eine Porosität von unter 80 % aufweist, **dadurch gekennzeichnet, dass** das Verhältnis von Wärme leitenden Materialien : kohlenstoffhaltigem Rückstand 10 : 90 bis 30 : 70 beträgt.

2. Gasdiffusionssubstrat nach Anspruch 1, wobei die Wärme leitenden Materialien Partikel mit einem D90 von 6-100 µm sind.

3. Gasdiffusionssubstrat nach Anspruch 2, wobei die Partikel Graphit (natürlich oder synthetisch) sind.

4. Gasdiffusionssubstrat nach Anspruch 1, wobei die Wärme leitenden Materialien ausgewählt sind aus der Gruppe bestehend aus: faserartigen oder röhrenförmigen Materialien; scheibenförmigen Materialien; oder irgendeiner anderen Form von Wärme leitendem Kohlenstoff.

5. Gasdiffusionssubstrat nach irgendeinem der Ansprüche 1 bis 4, wobei der kohlenstoffhaltige Rückstand aus einem carbonisierbaren Bindemittel erhalten ist.

6. Gasdiffusionssubstrat nach Anspruch 5, wobei das carbonisierbare Bindemittel ein Phenolbindemittel, ein auf Pech basierendes Harz oder ein anderes hochergiebiges carbonisierbares Harz umfasst.

7. Gasdiffusionssubstrat nach irgendeinem der Ansprüche 1 bis 6, wobei die Wärme leitenden Materialien und der kohlenstoffhaltige Rückstand in dem Substrat bei einem kombinierten Gewicht von 5-700 % im Vergleich zu dem Gewicht des nichtgewebten Faservlieses vorhanden sind.

8. Gasdiffusionssubstrat nach irgendeinem der Ansprüche 1 bis 7, wobei die senkrecht zur Ebene vorliegende Wärmeleitfähigkeit des Substrats mindestens 3 W/m·k bei einem Druck von 1000 kPa beträgt.

9. Verfahren zur Herstellung eines Gasdiffusionssubstrats nach irgendeinem der Ansprüche 1 bis 8, wobei das Verfahren folgende Schritte umfasst:
(i) Imprägnieren eines nichtgewebten Faservlieses mit einer Mischung aus Wärme leitenden Materialien und carbonisierbarem Bindemittel, wobei das Verhältnis von Wärme leitenden Materialien : kohlenstoffhaltigem Rückstand 10 : 90 bis 30 : 70 beträgt, um ein imprägniertes Vlies zu erhalten;
(ii) Härten des carbonisierbaren Bindemittels in dem nichtgewebten Faservlies bei einer Temperatur von 100-250 °C;
(iii) einen ersten Wärmebehandlungsschritt des imprägnierten Vlieses bei 600-1000 °C zum Carbonisieren des carbonisierbaren Bindemittels, um einen kohlenstoffhaltigen Rückstand übrig zu lassen; und
(iv) einen zweiten Wärmebehandlungsschritt bei 1800-3000 °C, um das Gasdiffusionssubstrat bereitzustellen.

10. Verfahren nach Anspruch 9, wobei vor Schritt (iii) zwei oder mehr imprägnierte nichtgewebte Faservliese laminiert werden.

11. Gasdiffusionselektode umfassend ein Gasdiffusionssubstrat nach irgendeinem der Ansprüche 1 bis 8 und einen an dem Gasdiffusionssubstrat aufgebrachten Elektrokatalysator.

12. Membranelektrodenanordnung umfassend ein Substrat nach irgendeinem der Ansprüche 1 bis 8 und eine katalysatorbeschichtete Protonenaustauschmembran.

13. Membranelektrodenanordnung umfassend eine Elektrode nach Anspruch 11 und eine Protonenaustauschmembran.

14. Brennstoffzelle umfassend ein Substrat nach irgendeinem der Ansprüche 1 bis 8, eine Elektrode nach Anspruch 11 oder eine Membranelektrodenanordnung nach irgendeinem der Ansprüche 12 und 13.

15. Phosphorsäure-Brennstoffzelle umfassend ein Substrat nach irgendeinem der Ansprüche 1 bis 8 oder eine Elektrode nach Anspruch 11.

## Revendications

1. Substrat de diffusion de gaz poreux comprenant une toile de fibres non tissées, des matériaux thermiquement conducteurs et un résidu carboné, dans lequel les matériaux thermiquement conducteurs et le résidu carboné sont noyés au sein de la toile de fibres non tissées et dans lequel les matériaux thermiquement conducteurs ont une dimension maximale comprise entre 1 et 100 µm et le substrat de diffusion de gaz a une porosité inférieure à 80 %, **caractérisé en ce que** le rapport des matériaux thermiquement conducteurs : résidu carboné est de 10:90 à 30:70.

2. Substrat de diffusion de gaz selon la revendication 1, dans lequel les matériaux thermiquement conducteurs sont des particules ayant un d90 de 6 à 100 µm.

3. Substrat de diffusion de gaz selon la revendication 2, dans lequel les particules sont en graphite (naturel ou synthétique).

4. Substrat de diffusion de gaz selon la revendication 1, dans lequel les matériaux thermiquement conducteurs sont choisis dans le groupe constitué de : matériaux fibreux ou tubulaires ; matériaux en forme de disque ; ou toute autre forme de carbone thermiquement conducteur

5. Substrat de diffusion de gaz selon l'une quelconque des revendications 1 à 4, dans lequel le résidu carboné est obtenu à partir d'un liant carbonisable.

6. Substrat de diffusion de gaz selon la revendication 5, dans lequel le liant carbonisable comprend un liant phénolique, une résine à base de brai ou une autre résine carbonisable à un haut rendement.

7. Substrat de diffusion de gaz selon l'une quelconque des revendications 1 à 6, dans lequel les matériaux thermiquement conducteurs et le résidu carboné sont présents dans le substrat à un poids combiné de 5 à 700 % par rapport au poids de la toile de fibres non tissées.

8. Substrat de diffusion de gaz selon l'une quelconque des revendications 1 à 7, dans lequel la conductivité thermique à travers le plan du substrat est d'au moins 3 W/m.k à une pression de 1 000 kPa.

9. Procédé de préparation d'un substrat de diffusion de gaz selon l'une quelconque des revendications 1 à 8, ledit procédé comprenant les étapes de :
(i) imprégnation d'une toile de fibres non tissées avec un mélange de matériaux thermiquement conducteurs et de liant carbonisable, dans lequel le rapport des matériaux thermiquement conducteurs : résidu carboné est de 10:90 à 30:70, pour donner une toile imprégnée ;
(ii) durcissement du liant carbonisable au sein de la toile de fibres non tissées à une température de 100 à 250°C ;
(iii) une première étape de traitement par la chaleur de la toile imprégnée à 600 à 1 000°C pour carboniser le liant carbonisable afin de laisser un résidu carboné ; et
(iv) une deuxième étape de traitement par la chaleur à 1 800 à 3 000°C pour fournir le substrat de diffusion de gaz.

10. Procédé selon la revendication 9, dans lequel avant l'étape (iii), deux toiles de fibres non tissés imprégnées ou plus sont stratifiées.

11. Électrode à diffusion de gaz comprenant un substrat de diffusion de gaz selon l'une quelconque des revendications 1 à 8 et un électrocatalyseur appliqué sur le substrat de diffusion de gaz.

12. Assemblage d'électrode à membrane comprenant un substrat selon l'une quelconque des revendications 1 à 8 et une membrane d'échange de protons revêtue de catalyseur.

13. Assemblage d'électrode à membrane comprenant une électrode selon la revendication 11, et une membrane d'échange de protons.

14. Pile à combustible comprenant un substrat selon l'une quelconque des revendications 1 à 8, une électrode selon la revendication 11, ou un assemblage d'électrode à membrane selon l'une quelconque des revendications 12 et 13.

15. Pile à combustible à base d'acide phosphorique, comprenant un substrat selon l'une quelconque des revendications 1 à 8 ou une électrode selon la revendication 11.
